# EUROPEAN PATENT SPECIFICATION

(11) **EP 4 246 072 B1**
(45) Date of publication and mention of the grant of the patent: **15.07.2026**
(21) Application number: 21891456.2
(22) Date of filing: 26.08.2021
(51) Int. Cl.: C21C 5/52, C21C 5/56, F27B 3/18, F27D 17/00, F27D 13/00, F27B 3/08, F27D 3/00, F27D 3/04, F27B 3/26, F27D 17/10

(54) **MELTING EQUIPMENT**
SCHMELZVORRICHTUNG
ÉQUIPEMENT DE FUSION

(30) Priority: 12.11.2020 JP 2020188707
(43) Date of publication of application: 20.09.2023
(73) Proprietor: JP Steel Plantech Co., Kanagawa 220-0012 (JP)
(72) Inventor: NAGAI, Takayoshi, Yokohama-shi, Kanagawa 222-0033 (JP); HAMADA, Naohiro, Yokohama-shi, Kanagawa 222-0033 (JP); AKIYAMA, Daisuke, Yokohama-shi, Kanagawa 222-0033 (JP)
(74) Representative: Hoffmann Eitle
(86) International application number: PCT/JP2021/031341
(87) International publication number: WO 2022/102208

(56) References cited:
- CN-Y- 2 697 565
- JP-A- H 116 686
- JP-A- S53 146 342
- US-A1- 2012 104 668

## Description

### Technical Field

The present invention relates to a melting facility.

### Background Art

As a melting facility for melting metallic raw material such as scrap iron, a melting facility is known, which continuously feeds the metallic raw material and preheats the metallic raw material to be charged into the melting furnace with the use of exhaust gas. For example, such a melting facility is disclosed in Patent Document 1, in which a melting furnace and a preheater are integrated with each other and the metallic raw material is fed from the preheater to the melting furnace while maintaining hermeticity. Meanwhile, for example, Patent Document 2 discloses a melting facility, in which a preheater (preheating tunnel) is arranged horizontally.

### Prior Art Document

### Patent Documents

Patent Document 1: Japanese Patent Application Laid-Open Publication No. 11-248356 (JP H11-248356 A)
Patent Document 2: Japanese Patent Application Laid-Open Publication No. 53-146342 (JP S53-146342 A)
CN 2 697 565 Y relates to an electric arc furnace. US 2012/104668 A1 is further prior art.

### Summary of Invention

### Problem to be Solved by the Invention

In the melting facility described in Patent Document 1, the furnace body and the preheater are tilted as one unit for tapping the molten iron or draining the slag, and therefore, when an existing melting furnace is modified to additionally install a preheater, it is necessary to install the preheater while avoiding interference with building pillars, etc. For this reason, it is difficult to install the preheater in an existing factory in a short period of time. Meanwhile, in the melting facility described in Patent Document 2, the preheater is not tilted, and therefore, it is easier to modify an existing melting furnace to additionally install a preheater than to do so in the melting facility described in Patent Document 1. However, since the preheating tunnel is arranged horizontally, the exhaust gas from the furnace body, which is used to preheat the metallic raw material, flows above the metallic raw material. For this reason, the hot exhaust gas is less prone to passing through spaces in the metallic raw material, so that the preheating efficiency is relatively low.

The present invention has been made in view of the above problems, and an object of the present invention is to provide a melting facility capable of preheating metallic raw material with high efficiency even when a horizontal preheating tunnel is used, which can easily be installed by modifying an existing melting furnace.

### Means for Solving the Problem

The invention is defined by claim 1.
A primary aspect of the present invention for achieving the above object is a melting facility for melting metallic raw material with the use of electric arcs formed by energising an arc electrode or electrodes, the melting facility being characterised by including: a furnace body, into which the metallic raw material to be melted is charged; a main preheating chamber, having a charging opening for charging the metallic raw material into the furnace body, for preheating the metallic raw material by exhaust gas introduced from the furnace body through the charging opening, the main preheating chamber being configured to be able to store the metallic raw material; a pusher, having a pushing member and a pushing-member driving device for causing the pushing member to move back and forth in the main preheating chamber, for pushing the metallic raw material from the main preheating chamber into the furnace body by causing the pushing member to move towards the charging opening; and a preheating tunnel, connected to the main preheating chamber and including a conveying device that conveys the metallic raw material laterally at a level higher than a lower edge of the charging opening of the main preheating chamber, for feeding the metallic raw material into the main preheating chamber by the conveying device while preheating the metallic raw material by the exhaust gas introduced from the furnace body through the main preheating chamber, whereby the melting facility is configured to be able to preheat the metallic raw material stored in the main preheating chamber until the metallic raw material is pushed by the pusher and thereby charged into the furnace body.

Other features of the present invention will be clarified by this description and the accompanying drawings.

### Effect of the Invention

According to the present invention, it is possible to preheat the metallic raw material with high efficiency even when a horizontal preheating tunnel is used, which can easily be installed by modifying an existing melting furnace.

### Brief Description of Drawings

[FIG. 1] FIG. 1 is a perspective view showing a melting facility 10 of an embodiment;
[FIG. 2] FIG. 2A is a plan view showing the melting facility 10 of the embodiment, and FIG. 2B is a sectional view showing the melting facility 10 of the embodiment;
[FIG. 3] FIG. 3 is a sectional view showing details of a main preheating chamber 12 and its periphery;
[FIG. 4] FIG. 4A is a plan view showing a melting facility 100 of a first comparative example, and FIG. 4B is a side view showing the melting facility 10 of the first comparative example;
[FIG. 5] FIG. 5 is an explanatory diagram showing a state, in which metallic raw material 1 is preheated in a melting facility 101 of a second comparative example.
[FIG. 6] FIGS. 6A and 6B are diagrams showing a state before charging the metallic raw material 1;
[FIG. 7] FIGS. 7A and 7B are diagrams showing a state during charging the metallic raw material 1;
[FIG. 8] FIGS. 8A and 8B are diagrams showing a front limit position of pushing members 26 relative to a movable floor member 35;
[FIG. 9] FIGS. 9A and 9B are diagrams showing a state after completing charging the metallic raw material 1; and
[FIG. 10] FIGS. 10A and 10B are explanatory diagrams showing a melting facility 10', which is a modification of the melting facility 10 of the embodiment.

### Embodiment for Carrying Out the Invention

At least the following will become clear from the description below and the drawings.

What will become clear is a melting facility for melting metallic raw material with the use of electric arcs formed by energising an arc electrode or electrodes, the melting facility being characterised by including: a furnace body, into which the metallic raw material to be melted is charged; a main preheating chamber, having a charging opening for charging the metallic raw material into the furnace body, for preheating the metallic raw material by exhaust gas introduced from the furnace body through the charging opening, the main preheating chamber being configured to be able to store the metallic raw material; a pusher, having a pushing member and a pushing-member driving device for causing the pushing member to move back and forth in the main preheating chamber, for pushing the metallic raw material from the main preheating chamber into the furnace body by causing the pushing member to move towards the charging opening; and a preheating tunnel, connected to the main preheating chamber and including a conveying device that conveys the metallic raw material laterally at a level higher than a lower edge of the charging opening of the main preheating chamber, for feeding the metallic raw material into the main preheating chamber by the conveying device while preheating the metallic raw material by the exhaust gas introduced from the furnace body through the main preheating chamber, whereby the melting facility is configured to be able to preheat the metallic raw material stored in the main preheating chamber until the metallic raw material is pushed by the pusher and thereby charged into the furnace body.

With the above melting facility, it is possible to preheat the metallic raw material with high efficiency even when a horizontal preheating tunnel is used, which can easily be installed by modifying an existing melting furnace.

It is preferable that, in the above melting facility, a level of a bottom of the preheating tunnel at a connecting portion, at which the preheating tunnel and the main preheating chamber are connected, be higher than a centre in a vertical direction of the charging opening of the main preheating chamber.

With the above melting facility, it is possible to reduce the cross-sectional area of the space above the piled-up metallic raw material, through which space the exhaust gas passes instead of passing through the spaces in the metallic raw material.

It is preferable that the above melting facility further include a connecting device configured to be able to cause a state of a boundary between a fixed portion and a movable portion to switch between a connected state and a separated state, wherein the fixed portion includes at least the preheating tunnel and is fixed to a foundation, the movable portion includes at least the furnace body and is configured to be able to move relative to the fixed portion so as to be able to be tilted when molten metal obtained by melting the metallic raw material is tapped, the connected state is a state, in which the metallic raw material is charged from the main preheating chamber into the furnace body, and the separated state is a state, in which the molten metal is tapped from the furnace body.

With the above melting facility, it is possible to charge the metallic raw material conveyed by the preheating tunnel included in the fixed portion into the furnace body included in the movable portion, and it is also possible to tilt the movable portion separately when the molten metal is tapped from the furnace body.

It is preferable that, in the above melting facility, the connecting device include: a movable floor member that forms at least part of a floor portion of the main preheating chamber; and a floor-member driving device that drives the movable floor member, and the connecting device is configured to be able to bring the state of the boundary into the connected state by causing the movable floor member to move to a connecting position, which is a position, in which the movable floor member straddles the boundary, and to bring the state of the boundary into the separated state by causing the movable floor member to move to a retracted position, which is a position, in which the movable floor member is retracted to the fixed portion side of the boundary.

With the above melting facility, it is possible to switch between the connected state and the separated state using a simple mechanism.

### === Embodiment ===

### <Overall Configuration of Melting Facility 10>

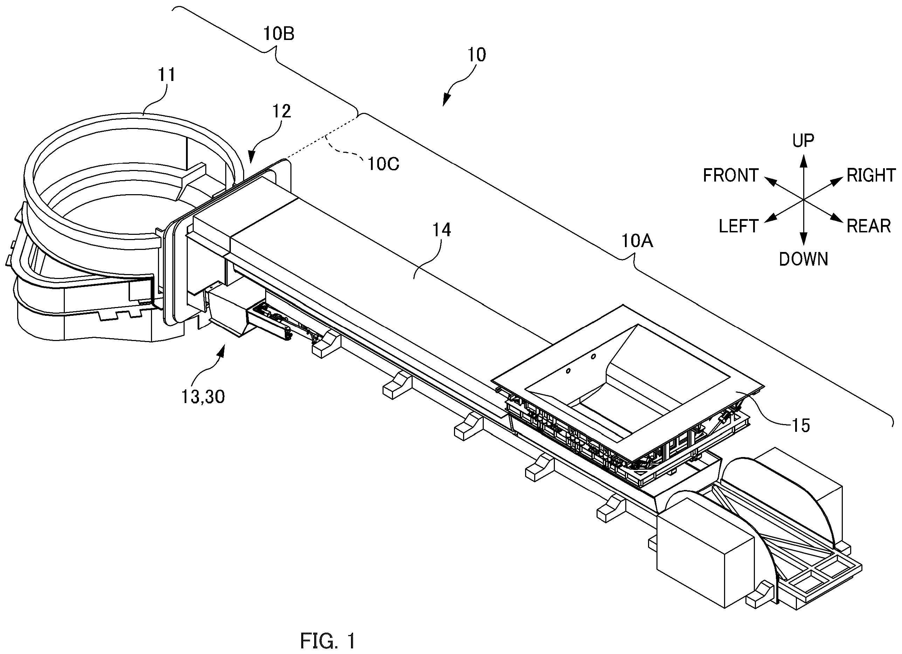

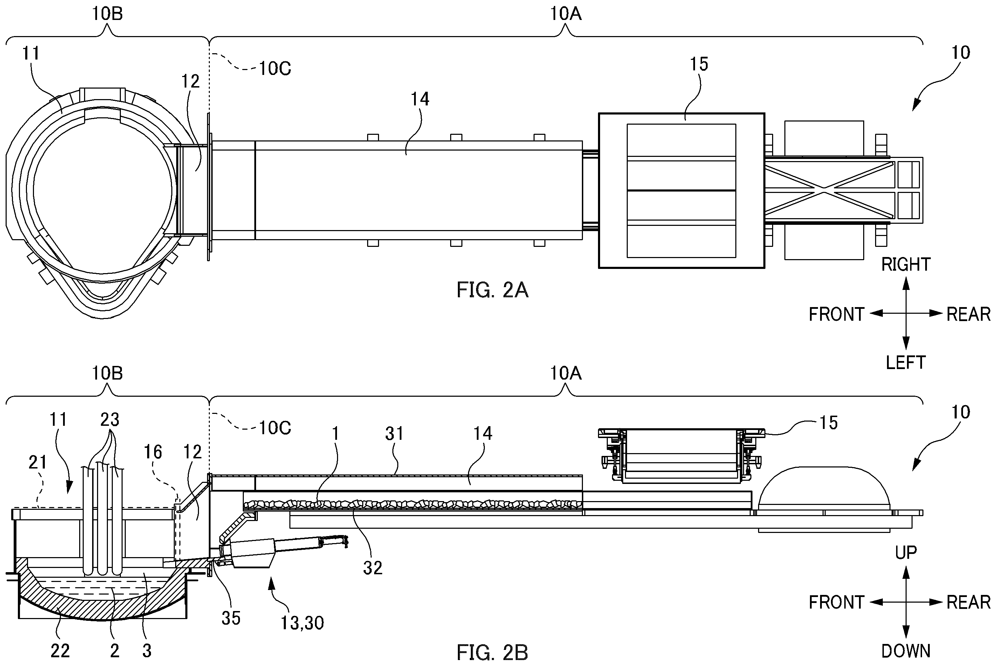

FIG. 1 is a perspective view showing a melting facility 10 of an embodiment. FIG. 2A is a plan view showing the melting facility 10 of this embodiment. FIG. 2B is a sectional view showing the melting facility 10 of this embodiment. In FIGS. 1 and 2A, some parts of the melting facility 10 (e.g., furnace roof 21, arc electrodes 23, etc.) are omitted.

The following explanation includes descriptions referring to directions shown in the drawings. That is, the side closer to the furnace body 11 in the direction, in which metallic raw material 1 is conveyed in the preheating tunnel 14, is referred to as "front" and the opposite side as "rear", and the direction along the conveying direction is also referred to as the "front-rear" direction. The vertical direction is also referred to as the "up and down" direction. The direction orthogonal to the "front-rear" and "up-down" directions is referred to as the "left-right" direction, with the right side being referred to as "right" and the left side as "left" when looking at the front side from the rear side.

In this embodiment, the melting facility 10 is a facility for melting and refining the metallic raw material 1 to produce molten steel. Scrap iron, reduced iron (Direct Reduced Iron (DRI)), Hot Briquetted Iron (HBI), cold pig iron (mould pig iron) and the like can be used as the metallic raw material 1 to be melted in the melting facility 10. In the following description, the components obtained by melting the metallic raw material 1 and used for molten steel is referred to as "molten metal" in some cases.

The melting facility 10 is an electric arc melting facility. In electric arc melting facilities, electric arcs are generated from an electrode or electrodes (arc electrode or electrodes) by energising the arc electrode(s) installed in the furnace. In such electric arc melting facilities, the metallic raw material 1 is heated and melted by the heat of the electric arcs generated from the arc electrode(s) (arc heat).

In the electric arc melting facility, a lot of electric power is consumed for melting the metallic raw material 1. Therefore, in the melting facility 10 of this embodiment, the metallic raw material 1 is melted while preheating the metallic raw material 1 with the exhaust gas generated from the furnace body 11, so that the required electric power is reduced as much as possible.

Melting facility 10 includes a gate hopper 15, the preheating tunnel 14, a main preheating chamber 12, a pusher 13, the furnace body 11 and a connecting device 30.

The gate hopper 15 is a device for feeding the metallic raw material 1 into the preheating tunnel 14. As shown in FIGS. 1 to 2B, the gate hopper 15 is positioned at a rear end portion of the preheating tunnel 14, above the preheating tunnel 14. The gate hopper 15 has a gate (not shown) that can be opened and closed at the bottom of the gate hopper 15. The gate hopper 15 stores the metallic raw material 1 inside, and when the gate is opened, the metallic raw material 1 is fed into the preheating tunnel 14.

The preheating tunnel 14 has a function of conveying the metallic raw material 1 to the main preheating chamber 12 in its interior and defines a space, in which the metallic raw material 1 is preheated by the exhaust gas introduced from the furnace body 11. As shown in FIGS. 1 to 2B, the preheating tunnel 14 is formed in the form of a tunnel extending in the front-rear direction. The front end portion of the preheating tunnel 14 is connected to the main preheating chamber 12. While the metallic raw material 1 is being conveyed to the main preheating chamber 12 in the preheating tunnel 14, the metallic raw material 1 is preheated by the exhaust gas, which is introduced from the furnace body 11 through the main preheating chamber 12, flowing in the preheating tunnel 14.

In this embodiment, the preheating tunnel 14 includes, as main components, a hood portion 31 covering the upper side, and a conveying device 32 having a U-shaped cross-section, which receives the metallic raw material 1 on the lower side of the preheating tunnel 14 and laterally conveys the metallic raw material 1 by vibration of the entire device. The inner space of the preheating tunnel 14 is defined by the hood portion 31 and the conveying device 32. The front end portion of the preheating tunnel 14 is connected to the main preheating chamber 12, as shown in FIGS. 1 to 2B. In this embodiment, the conveying device 32 is a horizontal vibratory conveyor as described above. However, the conveying device 32 may be a belt conveyor or any other device capable of conveying the metallic raw material 1 in a hot environment.

The main preheating chamber 12 is a portion configured to be able to store the metallic raw material 1, which is to be charged into the furnace body 11, for a predetermined period of time, and it is possible to preheat the metallic raw material 1 stored in the main preheating chamber 12 by the exhaust gas. As shown in FIGS. 1 to 2B, the main preheating chamber 12 is provided on the front side of the preheating tunnel 14, on the rear side of the furnace body 11. In other words, the main preheating chamber 12 is provided between the furnace body 11 and the preheating tunnel 14 in the conveying direction (front-rear direction), in which the metallic raw material 1 is conveyed. The metallic raw material 1 conveyed through the preheating tunnel 14 is stored in the main preheating chamber 12 for the predetermined period of time, during which time the metallic raw material 1 is preheated by the exhaust gas.

As shown in FIG. 2B, the main preheating chamber 12 has a charging opening 16 at the boundary between the main preheating chamber 12 and the furnace body 11. The charging opening 16 is an opening, through which the metallic raw material 1 is charged into the furnace body 11. The main preheating chamber 12 communicates with the furnace body 11 through the charging opening 16. Therefore, in the melting facility 10 of this embodiment, the exhaust gas generated by melting the metallic raw material 1 in the furnace body 11 is introduced into the main preheating chamber 12 through the charging opening 16. Other details of the configuration and function of the main preheating chamber 12 will be described later.

The pusher 13 is a device for pushing the metallic raw material 1 into the furnace body 11. The pusher 13 is provided on the rear side of the main preheating chamber 12, below the preheating tunnel 14. The metallic raw material 1 conveyed through the preheating tunnel 14 and stored in the main preheating chamber 12 is pushed into the furnace body 11 by the pusher 13. Therefore, in this embodiment, the predetermined period of time, during which the metallic raw material 1 is stored in the main preheating chamber 12, is from when the metallic raw material 1 is charged into the main preheating chamber 12 to when the metallic raw material 1 is pushed by the pusher 13 and thereby charged into the furnace body 11. Other details of the configuration and function of the pusher 13 will be described later.

The furnace body 11 is the body of the melting furnace, into which the metallic raw material 1 is charged and in which the metallic raw material 1 is melted by the arc heat. As shown in FIG. 2B, the metallic raw material 1 is heated and melted in the furnace body 11 to form molten metal 2 and slag 3. The molten metal 2 is refined by performing decarburation, for example, as necessary, and is then tapped as molten steel from a tapping spout (not shown). The slag 3 is removed prior to tapping of the molten steel.

As shown in FIGS. 1 to 2B, the furnace body 11 is provided on the front side of the main preheating chamber 12. In other words, the furnace body 11 is provided at the end in the front direction, in which the metallic raw material 1 is conveyed. The metallic raw material 1 stored and preheated in the main preheating chamber 12 is charged into the furnace body 11 through the charging opening 16 and melted in the furnace body 11. The furnace body 11 is formed of an iron shell having a water-cooling structure and a lining (refractory) inside the iron shell. However, the furnace body 11 may be formed otherwise.

The furnace body 11 has a furnace roof 21, the lining 22, and the arc electrodes 23. The furnace roof 21 is a lid member provided on the top of the furnace body 11 so that the lid member can be opened and closed. The lining 22 is provided at the bottom of the furnace body 11, at which the molten metal 2 is stored, and is made of refractory material. The arc electrodes 23 are electrodes for generating the electric arcs. As shown in FIG. 2B, the arc electrodes 23 are provided so as to penetrate through the furnace roof 21 to be inserted into the furnace body 11 from above the furnace roof 21. Three arc electrodes 23 are inserted into the furnace body 11. The way of providing the arc electrodes 23 and the number of the arc electrodes 23 are not limited to those shown in FIG. 2B.

In this embodiment, alternating voltages are applied to the arc electrodes 23 from a power source (not shown) to energise the arc electrodes 23. This generates the electric arcs between the arc electrodes 23 and the metallic raw material 1 in the furnace body 11, so that it is possible to heat and melt the metallic raw material 1 by the arc heat (i.e., molten metal 2 can be obtained).

The detailed configuration of the furnace body 11 is not limited to the configuration shown above (furnace roof 21, lining 22 and arc electrodes 23). For example, although not shown in FIGS. 1 to 2B, the furnace body 11 may further have an oxygen gas blowing lance or lances and a carbon-material blowing lance or lances. The oxygen gas blowing lance(s) and the carbon-material blowing lance(s) may be installed so that these lances penetrate the furnace roof 21 and are movable up and down inside the furnace body 11. Oxygen gas is blown into the furnace body 11 from the oxygen gas blowing lance(s). Carbon materials, such as coke, char, coal, charcoal, and graphite, are blown into the furnace body 11 from the carbon-material blowing lance(s) using air, nitrogen gas, or the like as a carrier gas. With the oxygen gas blowing lance(s) and/or the carbon-material blowing lance(s) installed, refining of the molten metal 2, such as decarburation, can be performed.

The furnace body 11 may further have a tilting mechanism (not shown). By tilting the furnace body 11 by the tilting mechanism, it is possible to tap the molten metal 2 and to drain the slag 3. In terms of the tilting of the furnace body 11 by the tilting mechanism, as shown in FIGS. 1 to 3, the melting facility 10 is divided into a fixed portion 10A and a movable portion 10B at a boundary 10C in this embodiment. The fixed portion 10A is a portion fixed to the foundation and includes the preheating tunnel 14. The fixed portion 10A may include components other than the preheating tunnel 14. The movable portion 10B is a portion configured to be movable relative to the fixed portion 10A and includes the furnace body 11. In other words, the movable portion 10B is a portion that is tilted in synchronization with the furnace body 11. The movable portion 10B may include components other than the furnace body 11.

The connecting device 30 is a device configured to be able to cause the state of the boundary between the fixed portion 10A and the movable portion 10B to switch between a connected state and a separated state. The connected state is the state, in which the metallic raw material 1 is charged from the main preheating chamber 12 into the furnace body 11; specifically, for example, a movable floor member 35, described later, is in a connecting position, which is the position such that the movable floor member 35 straddles the boundary, so that, so to speak, a bridge to facilitate movement of the metallic raw material 1 is crossed between the fixed portion 10A and the movable portion 10B. It is necessary that, when the boundary is in the connected state, at least the pushing members 26 of the pusher 13, described later, not be prevented from moving across the boundary. On the other hand, the separated state is the state, in which the molten metal 2 obtained by melting the metallic raw material 1 is tapped from the furnace body 11; specifically, for example, the movable floor member 35, described later, is in a retracted position, which is the position such that the movable floor member 35 is retracted to the fixed portion 10A side of the boundary, so that tilting of the movable portion 10B is not hindered by the movable floor member 35 and the molten metal 2 can be tapped from the furnace body 11. It is necessary that, when the boundary is in the separated state, the movable portion 10B of the melting facility 10 be movable relative to the fixed portion 10A so that molten metal can be tapped from the furnace body 11. It is not necessary that the melting facility 10 have the connecting device 30. Other details of the configuration and function of the connecting device 30 will be described later.

### <Main Preheating Chamber 12>

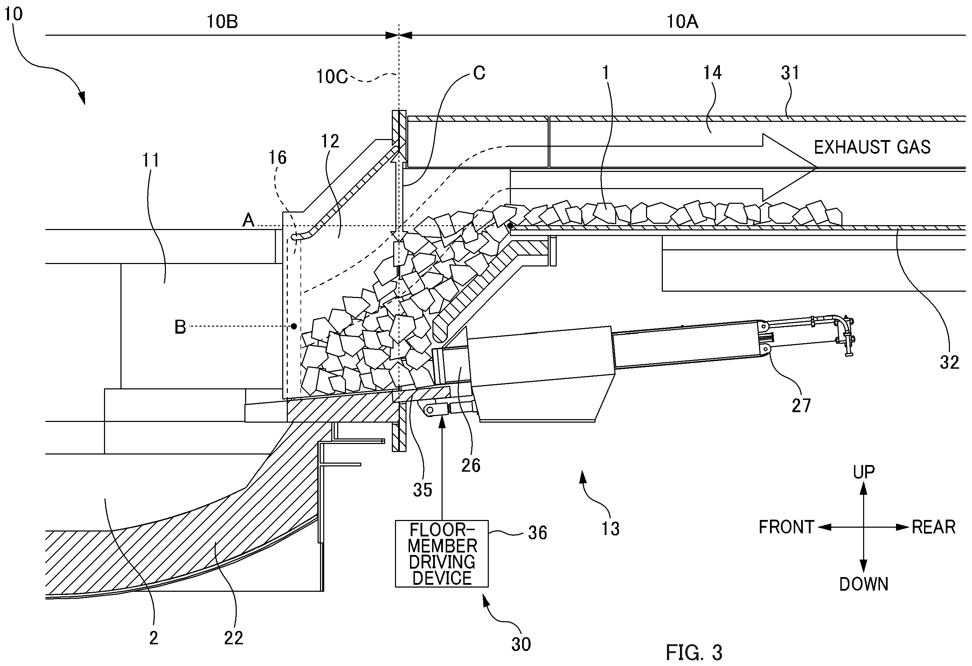

FIG. 3 is a sectional view showing the main preheating chamber 12 and its periphery in detail.

In this embodiment, the conveying device 32 of the preheating tunnel 14 conveys the metallic raw material 1 in a horizontal direction. Furthermore, in this embodiment, the conveying device 32 of the preheating tunnel 14 conveys the metallic raw material 1 at a level higher than the lower edge of the charging opening 16 of the main preheating chamber 12. Therefore, as shown in FIG. 3, the metallic raw material 1 conveyed to the front end of the conveying device 32 is stored in the more front main preheating chamber 12 at a level, to which the metallic raw material 1 falls a certain height from the conveying level, at which the metallic raw material 1 is conveyed (that is, the level higher than the lower edge of the charging opening 16 of the main preheating chamber 12). In this embodiment, the range of the main preheating chamber 12 in the front-rear direction is from the front end portion of the conveying device 32 to the charging opening 16. Therefore, part (front end portion) of the preheating tunnel 14 (hood portion 31) defines part of the main preheating chamber 12. However, the range of the main preheating chamber 12 in the front-rear direction may be other than this, as long as the metallic raw material 1 can be stored for the predetermined period of time.

In this embodiment, the metallic raw material 1 is stored in the main preheating chamber 12 for the predetermined period of time, so that it is possible to store the metallic raw material 1 until the height of the metallic raw material 1 piled up in the main preheating chamber 12 approaches the conveying level of the metallic raw material 1 described above. As a result, the cross-sectional area C of the space above the piled-up metallic raw material 1 is reduced as shown in FIG. 3. The cross-sectional area C shown in FIG. 3 indicates the size of the space, through which the exhaust gas passes instead of passing through spaces in the metallic raw material 1. Therefore, when the cross-sectional area C is reduced, the amount of exhaust gas that passes through the spaces in the metallic raw material 1 increases, so that it is possible to preheat the metallic raw material 1 more efficiently.

Furthermore, as shown in FIG. 3, in this embodiment, the level (A) of the bottom of the preheating tunnel 14 at the connecting portion, at which the preheating tunnel 14 is connected to the main preheating chamber 12, is positioned at a level higher than the centre (B) in the vertical direction of the charging opening 16 of the main preheating chamber 12. This also reduces the cross-sectional area C of the space above the piled-up metallic raw material 1, so that the amount of exhaust gas that passes through the spaces in the metallic raw material 1 increases and it is therefore made possible to preheat the metallic raw material 1 more efficiently.

As described above, the metallic raw material 1, which has been stored in the main preheating chamber 12 for the predetermined period of time, is pushed into the furnace body 11 by the pusher 13. As shown in FIG. 3, the pusher 13 has pushing members 26 and pushing-member driving devices 27. The pushing members 26 are members for pushing the metallic raw material 1 towards the furnace body 11. The pushing-member driving devices 27 are devices that cause the pushing members 26 to move back and forth along the pushing direction of the metallic raw material 1, in which the metallic raw material 1 is pushed (specifically, the direction in the main preheating chamber 12 from the end opposite the charging opening 16 to the charging opening 16). It is possible to control the amount of charging the metallic raw material 1 more directly and stably by causing the pushing members 26 to move back and forth by the pushing-member driving devices 27 to push the metallic raw material 1 towards the furnace body 11, as compared to the case where the metallic raw material is charged into the furnace body with the use of the stick-slip horizontal vibratory conveyor.

As shown in FIG. 3, the above-described connecting device 30 has the above-described movable floor member 35 and a floor-member driving device 36. The movable floor member 35 is a member forming at least part of the floor portion of the main preheating chamber 12. The floor-member driving device 36 is a device that causes the movable floor member 35 to move between the connecting position, in which the movable floor member 35 straddles the boundary 10C, and the retracted position, in which the movable floor member 35 is retracted to the fixed portion 10A side of the boundary 10C. When the movable floor member 35 is retracted to the fixed portion 10A side of the boundary 10C, the furnace body 11 included in the movable portion 10B can be tilted without interfering with the movable floor member 35. In this embodiment, it is possible to switch between the connected state and the separated state using such a simple mechanism that the movable floor member 35 moves between the connecting position and the retracted position.

### <Comparative Example>

### - First Comparative Example

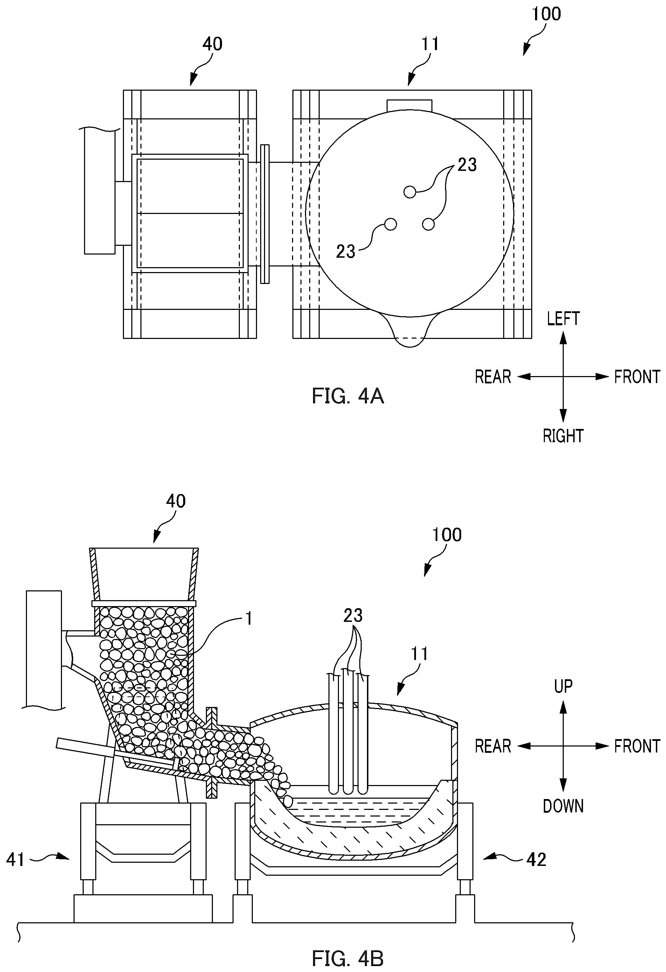

FIG. 4A is a plan view showing a melting facility 100 of a first comparative example. FIG. 4B is a side view showing the melting facility 100 of the first comparative example.

The melting facility 100 of the first comparative example includes a furnace body 11 for melting the metallic raw material 1 with the use of electric arcs and a preheater 40 for storing the raw material. The metallic raw material 1 in the preheater 40 is preheated by the heat of the exhaust gas introduced from the furnace body 11. The melting facility 100 further includes a furnace-body tilting mechanism 42 for tilting the furnace body 11 and a preheater tilting mechanism 41 for tilting the preheater 40. When the molten metal is tapped from the furnace body 11, the furnace body 11 and the preheater 40 are tilted synchronously. In the following description, the melting facility 100 of the first comparative example will be referred to also as a "vertical preheater-type melting facility".

In relation to preheating the metallic raw material 1 by exhaust gas, the melting facility 100 has a structure, in which the furnace body 11 and the preheater 40 are integrated with each other, and all the exhaust gas is discharged after passing through the spaces in the metallic raw material 1, so that it is possible to preheat the metallic raw material 1 with high thermal efficiency while maintaining hermeticity. However, the melting facility 100 of the first comparative example needs to be installed while avoiding, for example, interference of the preheater 40 with the building pillars, which makes it difficult to install the melting facility 100 in an existing factory in a short period of time.

### - Second Comparative Example

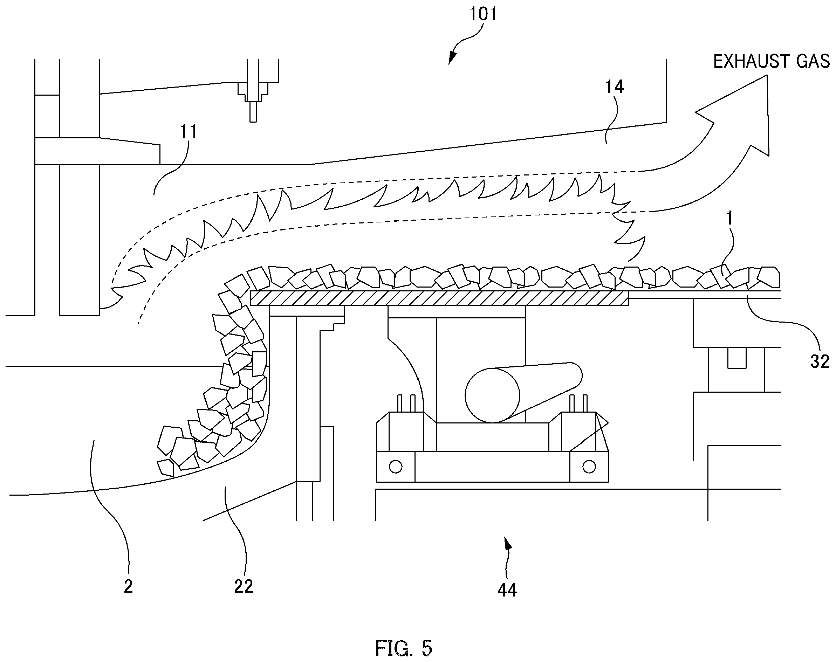

FIG. 5 is an explanatory diagram showing a state, in which the metallic raw material 1 is preheated in a melting facility 101 of a second comparative example.

In the melting facility 101 of the second comparative example, a preheater (preheating tunnel 14) is arranged horizontally. In the following description, the melting facility 101 of the second comparative example will be referred to also as a "horizontal preheater-type melting facility". In the melting facility 101 of the second comparative example, in the preheating tunnel 14, a connecting car 44 carrying the metallic raw material 1 is moved to the connection portion, at which the preheating tunnel 14 is connected to the furnace body 11, to charge the metallic raw material 1 into the furnace body 11. It is made possible to tilt the furnace body 11 without interference with the connecting car 44 by moving the connecting car 44, which has completed charging the metallic raw material 1, to the rear side.

Therefore, it is easier to modify an existing melting furnace and additionally install a preheater (preheating tunnel) than to do so in the melting facility 100 of the first comparative example because the preheating tunnel 14 is not tilted in the case of the melting facility 101 of the second comparative example. However, since the metallic raw material 1 is charged into the furnace body 11 after being conveyed horizontally in the preheating tunnel 14, the exhaust gas from the furnace body 11, which is used for preheating the metallic raw material 1, flows above the metallic raw material 1 as shown in FIG. 5. For this reason, the hot exhaust gas is less prone to passing through the metallic raw material 1, so that the preheating efficiency is relatively low.

In contrast, in this embodiment, as shown in FIG. 3 explained above, the amount of exhaust gas that passes through the spaces in the metallic raw material 1 is larger than that in the case of the melting facility 101 of the second comparative example, so that it is possible to preheat the metallic raw material 1 more efficiently. In other words, it is possible to preheat the metallic raw material 1 with high efficiency even when a horizontal preheating tunnel 14 such as used in horizontal preheater-type melting facilities is used.

In horizontal preheater-type melting facilities, the exhaust gas flows above the metallic raw material 1, so that the metallic raw material 1 is preheated mainly by radiation heat transfer. However, in the melting facility 10 of this embodiment, not only the exhaust gas flows above the metallic raw material 1, but also the hot exhaust gas passes through the spaces in the metallic raw material 1 in the main preheating chamber 12. This means that in addition to preheating by radiation heat transfer, direct preheating by convection heat transfer is carried out at a higher rate.

### <Operation of Pusher 13 and Connecting Device 30>

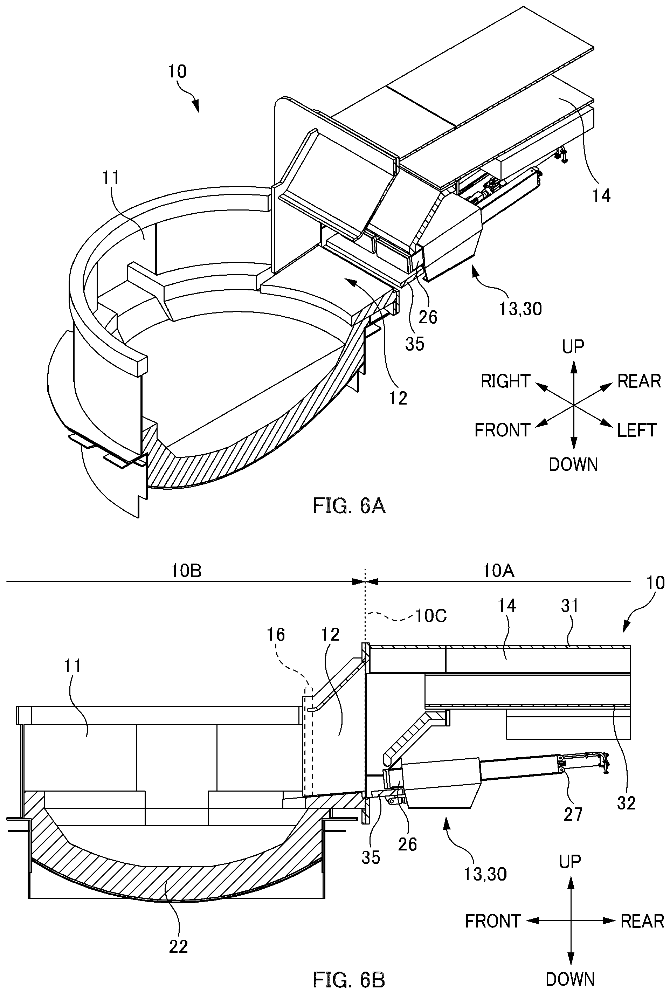

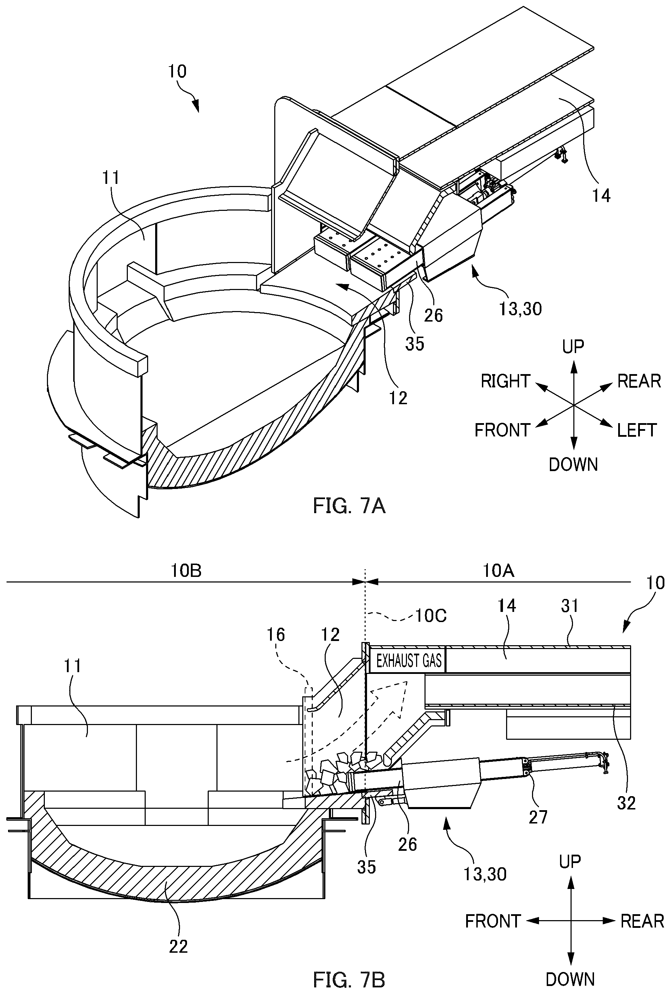

FIGS. 6A and 6B are diagrams showing a state before charging the metallic raw material 1. FIG. 6A (as well as FIGS. 7A, 8A, and 9A below) is a sectional perspective view of the main preheating chamber 12 and its periphery, and FIG. 6B (as well as FIGS. 7B, 8B, and 9B below) is a sectional view of the main preheating chamber 12 and its periphery.

In the state shown in FIGS. 6A and 6B, the movable floor member 35 together with the pushing members 26 is positioned in the retracted position, in which the movable floor member 35 is retracted to the fixed portion 10A side (rear side) of the boundary 10C. In this state, the furnace body 11 included in the movable portion 10B does not interfere with the movable floor member 35, so that the furnace body 11 can be tilted without restriction from the side of the preheating tunnel 14 included in the fixed portion 10A. In other words, the boundary 10C is in the separated state, which is the state in which the molten metal 2 is tapped from the furnace body 11. When the boundary 10C is in this separated state, the molten metal 2 can be tapped from the furnace body 11 included in the movable portion 10B by tilting the furnace body 11, if the molten metal 2 has already been obtained.

FIGS. 7A and 7B are diagrams showing a state during charging the metallic raw material 1.

In FIGS. 7A and 7B, the movable floor member 35 has moved from the retracted position to the front side and is positioned in the connecting position, in which the movable floor member 35 straddles the boundary 10C. In this position, the movable floor member 35 forms at least part of the floor portion of the main preheating chamber 12 and enables the metallic raw material 1 to be stored in the main preheating chamber 12. The pushing members 26 then push the metallic raw material 1 towards the furnace body 11 in the pushing direction, thereby charging the metallic raw material 1 into the furnace body 11. The state shown in FIGS. 7A and 7B is the connected state, which is the state, in which the metallic raw material 1 is charged from the main preheating chamber 12 into the furnace body 11. In this state, the exhaust gas from the furnace body 11 passes through the spaces in the metallic raw material 1 to preheat the metallic raw material 1.

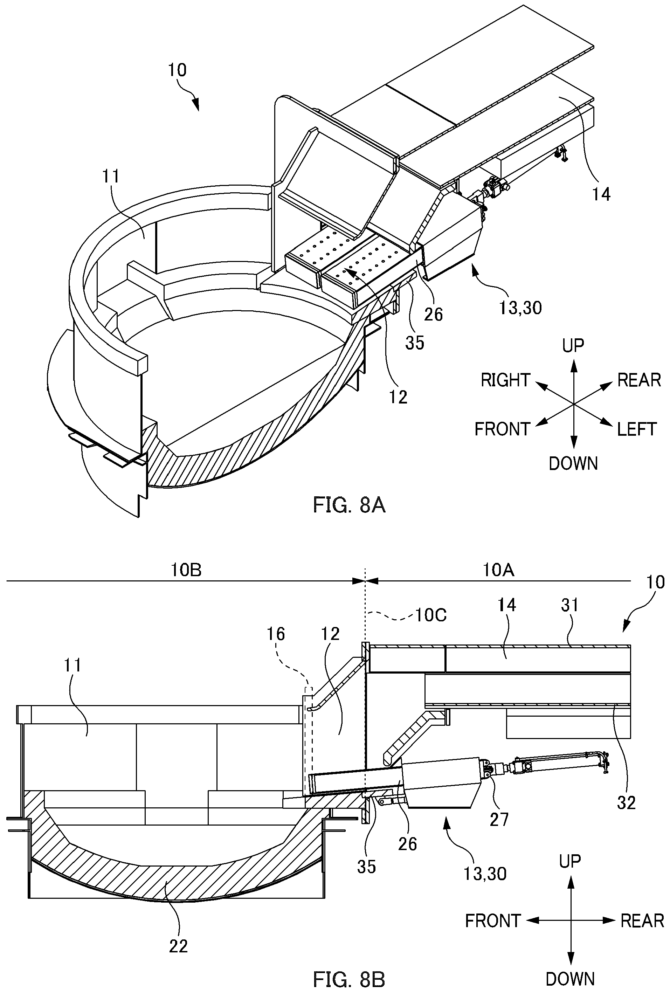

FIGS. 8A and 8B are diagrams showing a front limit position of the pushing members 26 relative to the movable floor member 35.

As shown in FIGS. 8A and 8B, when the tips of the pushing members 26 move forward to the charging opening 16 provided at the front side of the main preheating chamber 12, at least the metallic raw material 1 present in front of the movable floor member 35 in the main preheating chamber 12 is charged into the furnace body 11.

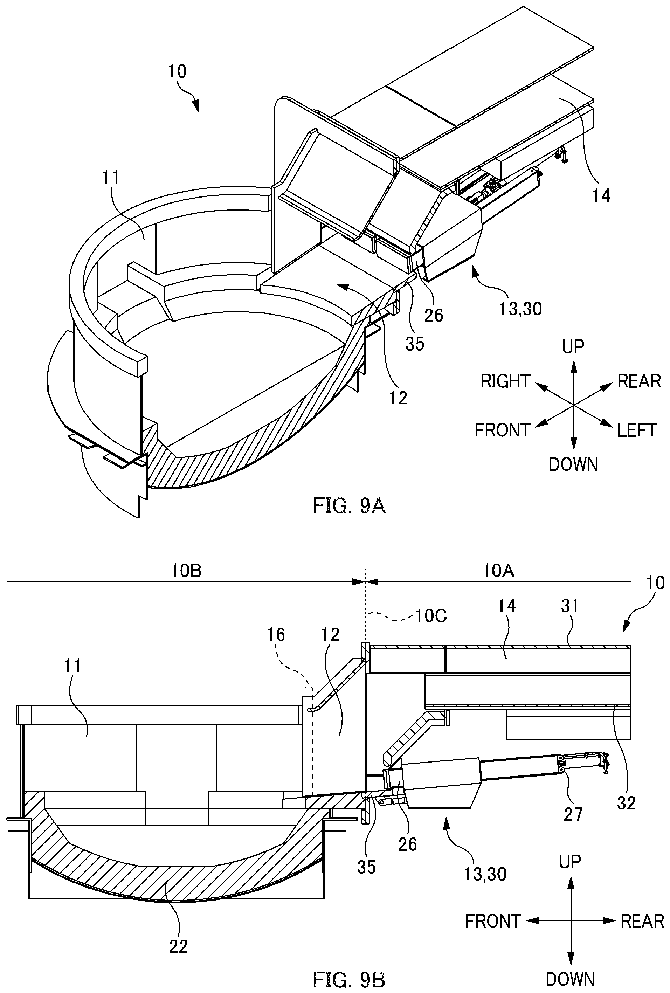

FIGS. 9A and 9B are diagrams showing a state after completing charging the metallic raw material 1.

After completing charging the metallic raw material 1 into the furnace body 11, the pushing members 26 are retracted to the fixed portion 10A side (rear side) of the boundary 10C, as shown in FIGS. 9A and 9B. After the state shown in FIGS. 9A and 9B, the movable floor member 35 is also retracted to the fixed portion 10A side (rear side) of the boundary 10C and is positioned in the retracted position. In other words, the boundary 10C is again brought to the separated state shown in FIGS. 6A and 6B, that is, the state is brought about, in which the furnace body 11 can be tilted relative to the preheating tunnel 14 included in the fixed portion 10A. The molten metal 2 can be tapped from the furnace body 11 by tilting the furnace body 11 included in the movable portion 10B.

### <Modification>

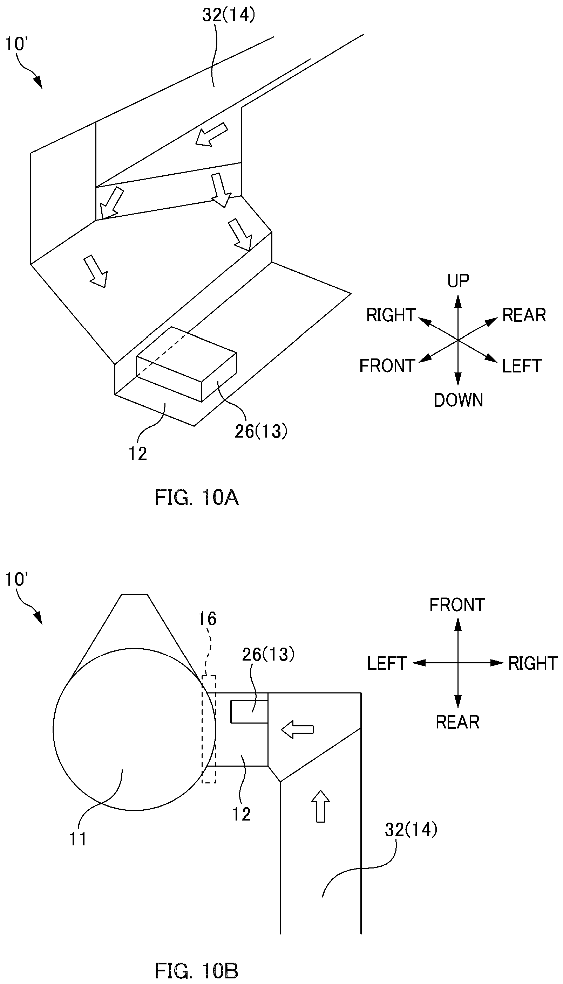

FIGS. 10A and 10B are explanatory diagrams showing a melting facility 10', which is a modification of the melting facility 10 of the above-described embodiment. The parts that differ from the melting facility 10 will be described below.

In the melting facility 10 of the above-described embodiment, the metallic raw material 1 is conveyed in the front-rear direction and charged into the furnace body 11 positioned on the front side. In this modification, however, at the front end of the preheating tunnel 14, the conveying direction of the metallic raw material 1 is bent by 90 degrees and the metallic raw material 1 is charged into the furnace body 11 positioned on the left side. Also in this case, it is possible to preheat the metallic raw material 1 with high efficiency even when the horizontal preheating tunnel 14 is used, which can easily be installed by modifying an existing melting furnace. Furthermore, it is possible to install the preheating tunnel 14 so as to extend in a direction different from that of the melting facility 10, that is, in any direction, such as orthogonal to the direction in which the preheating tunnel of the melting facility 10 extends, depending on the positional relationship between the furnace body 11 and the existing peripheral equipment. This increases the degree of freedom of installation.

### <Brief Summary>

As shown in FIGS. 1 to 3, 10A, and 10B, the melting facilities 10 and 10' of the above embodiment and modification melt the metallic raw material 1 by the electric arcs formed by energising the arc electrodes 23.

As shown in FIGS. 1 to 3, 10A, and 10B, each of the melting facilities 10 and 10' of the above embodiment and modification includes:
the furnace body 11, into which the metallic raw material 1 to be melted is charged;
the main preheating chamber 12, having the charging opening 16 for charging the metallic raw material 1 into the furnace body 11, for preheating the metallic raw material 1 by the exhaust gas introduced from the furnace body 11 through the charging opening 16, the main preheating chamber 12 being configured to be able to store the metallic raw material 1;
the pusher 13, having the pushing members 26 and the pushing-member driving devices 27 for causing the pushing members 26 to move back and forth in the main preheating chamber 12 along the direction from the end of the pushing members 26 opposite the charging opening 16 to the charging opening 16 (the front-rear direction in the case of FIGS. 1 to 3, and the direction orthogonal to the front-rear direction in the case of FIGS. 10A and 10B), for pushing the metallic raw material 1 from the main preheating chamber 12 into the furnace body 11 by causing the pushing members 26 to move toward the charging opening 16; and
the preheating tunnel 14, connected to the main preheating chamber 12 and having the conveying device 32 that conveys the metallic raw material 1 laterally (in the front-rear direction) at the level higher than the lower edge of the charging opening 16 of the main preheating chamber 12, for feeding the metallic raw material 1 into the main preheating chamber 12 by the conveying device 32 while preheating the metallic raw material 1 by the exhaust gas introduced from the furnace body 11 through the main preheating chamber 12.

As shown in FIGS. 6 to 9, in the above embodiment, the melting facility 10 is configured to be able to preheat the metallic raw material 1 stored in the main preheating chamber 12 until the metallic raw material 1 is pushed by the pushing members 26 (pusher 13) and thereby charged into the furnace body 11.

Accordingly, it is possible to preheat the metallic raw material 1 with high efficiency even when the horizontal preheating tunnel 14 is used, which can easily be installed by modifying an existing melting furnace.

As shown in FIG. 3, in the melting facilities 10 and 10' of the above embodiment and modification, the level (A) of the bottom of the preheating tunnel 14 at the connecting portion, at which the preheating tunnel 14 and the main preheating chamber 12 are connected, is higher than the centre (B) in the vertical direction of the charging opening 16 of the main preheating chamber 12.

Accordingly, in the cases of the above embodiment and modification, it is possible to reduce the cross-sectional area of the space above the piled-up metallic raw material 1, through which space the exhaust gas passes instead of passing through the spaces in the metallic raw material 1.

As shown in FIG. 3, each of the melting facilities 10 and 10' of the above embodiment and modification further includes the connecting device 30 configured to be able to cause the state of the boundary 10C between the fixed portion 10A and the movable portion 10B to switch between the connected state (the state shown in FIGS. 7 to 9) and the separated state (the state shown in FIG. 6), wherein the fixed portion 10A includes at least the preheating tunnel 14 and is fixed to the foundation, the movable portion 10B includes at least the furnace body 11 and is configured to be able to move relative to the fixed portion 10A so as to be able to be tilted when the molten metal 2 obtained by melting the metallic raw material 1 is tapped, the connected state is the state, in which the metallic raw material 1 is charged from the main preheating chamber 12 into the furnace body 11, and the separated state is the state, in which the molten metal 2 is tapped from the furnace body 11..

Accordingly, in the cases of the above embodiment and modification, it is possible to charge the metallic raw material 1 conveyed by the preheating tunnel 14 included in the fixed portion 10A into the furnace body 11 included in the movable portion 10B, and it is also possible to tilt the movable portion 10B separately when the molten metal 2 is tapped from the furnace body 11.

As shown in FIG. 3, in the melting facilities 10 and 10' of the above embodiment and modification, the connecting device 30 includes: the movable floor member 35 that forms at least part of the floor portion of the main preheating chamber 12; and the floor-member driving device 36 that drives the movable floor member 35, and the connecting device 30 is configured to be able to bring the state of the boundary 10C into the connected state (the state shown in FIGS. 7 to 9) by causing the movable floor member 35 to move to the connecting position, which is the position, in which the movable floor member 35 straddles the boundary 10C, and to bring the state of the boundary 10C into the separated state (the state shown in FIG. 6) by causing the movable floor member 35 to move to the retracted position, which is the position, in which the movable floor member 35 is retracted to the fixed portion 10A side (rear side) of the boundary 10C.

Accordingly, in the cases of the above embodiment and modification, it is possible to switch between the connected state and the separated state using a simple mechanism.

### == Other ==

While the present invention has been described above using the embodiment and modification, the present invention is not limited to the configurations of these embodiment and modification. The scope of the present invention is defined based on the attached claims. For example, while the melting facility 10 produces molten steel in the above embodiment, the present invention is not limited to this and can also be applied to facilities for melting other metals such as aluminium.

### Description of Reference Numerals

1 metallic raw material
2 molten metal
3 slag
10, 10', 100, 101 melting facility
10A fixed portion
10B movable portion
10C boundary
11 furnace body
12 main preheating chamber
13 pusher
14 preheating tunnel
15 gate hopper
16 charging opening
21 furnace roof
22 lining
23 arc electrode
26 pushing member
27 pushing-member driving device
30 connecting device
31 hood portion
32 conveying device
35 movable floor member
36 floor-member driving device
40 preheater
41 preheater tilting mechanism
42 furnace-body tilting mechanism
44 connecting car

## Claims

1. A melting facility (10; 10'), including a furnace body (11), into which metallic raw material to be melted is charged, and a preheating tunnel (14) having a conveying device (32) that conveys the metallic raw material laterally and that is one of a horizontal vibratory conveyor and a belt conveyor, for melting the metallic raw material with the use of electric arcs formed by energising an arc electrode or electrodes (23) in the furnace body (11) while preheating the metallic raw material by exhaust gas generated from the furnace body (11), the melting facility (10; 10') being **characterised by** comprising:
a main preheating chamber (12), having a charging opening (16) for charging the metallic raw material into the furnace body (11), for preheating the metallic raw material by the exhaust gas introduced from the furnace body (11) through the charging opening (16), wherein the preheating tunnel (14) is connected to the main preheating chamber (12), and the main preheating chamber (12) is configured to be able to store the metallic raw material; and
a pusher (13), including a pushing member (26) and a pushing-member driving device (27) for causing the pushing member (26) to move back and forth in the main preheating chamber (12), for pushing the metallic raw material from the main preheating chamber (12) into the furnace body (11) by causing the pushing member (26) to move towards the charging opening (16), wherein
the preheating tunnel (14) is configured such that the conveying device (32) conveys the metallic raw material laterally at a level higher than a lower edge of the charging opening (16) of the main preheating chamber (12), and the preheating tunnel (14) feeds the metallic raw material into the main preheating chamber (12) by the conveying device (32) while preheating the metallic raw material by the exhaust gas introduced from the furnace body (11) through the main preheating chamber (12),
whereby the melting facility (10; 10') is configured to be able to preheat the metallic raw material stored in the main preheating chamber (12) until the metallic raw material is pushed by the pusher (13) and thereby charged into the furnace body (11).

2. The melting facility (10; 10') according to claim 1, **characterised in that** a level of a bottom of the preheating tunnel (14) at a connecting portion, at which the preheating tunnel (14) and the main preheating chamber (12) are connected, is higher than a centre in a vertical direction of the charging opening (16) of the main preheating chamber (12).

3. The melting facility (10; 10') according to claim 1 or 2, **characterised by** further comprising a connecting device (30) configured to be able to cause a state of a boundary between a fixed portion (10A) and a movable portion (10B) to switch between a connected state and a separated state, wherein the fixed portion (10A) includes at least the preheating tunnel (14) and is fixed to a foundation, the movable portion (10B) includes at least the furnace body (11) and is configured to be able to move relative to the fixed portion (10A) so as to be able to be tilted when molten metal obtained by melting the metallic raw material is tapped, the connected state is a state, in which the metallic raw material is charged from the main preheating chamber (12) into the furnace body (11), and the separated state is a state, in which the molten metal is tapped from the furnace body (11).

4. The melting facility (10; 10') according to claim 3, **characterised in that** the connecting device (30) includes: a movable floor member (35) that forms at least part of a floor portion of the main preheating chamber (12); and a floor-member driving device (36) that drives the movable floor member (35), and the connecting device (30) is configured to be able to bring the state of the boundary into the connected state by causing the movable floor member (35) to move to a connecting position, which is a position, in which the movable floor member (35) straddles the boundary, and to bring the state of the boundary into the separated state by causing the movable floor member (35) to move to a retracted position, which is a position, in which the movable floor member (35) is retracted to the fixed portion side of the boundary.

## Patentansprüche

1. Schmelzvorrichtung (10; 10'), einschließlich eines Ofenkörpers (11), in den zu schmelzendes metallisches Rohmaterial beschickt wird, und eines Vorwärmtunnels (14) mit einer Fördereinrichtung (32), die das metallische Rohmaterial seitlich fördert und die ein horizontaler Vibrationsförderer oder ein Bandförderer ist, zum Schmelzen des metallischen Rohmaterials unter Verwendung von elektrischen Lichtbögen, die durch Bestromen einer oder mehrerer Lichtbogenelektroden (23) in dem Ofenkörper (11) gebildet werden, während das metallische Rohmaterial durch von dem Ofenkörper (11) erzeugtes Abgas vorgewärmt wird, wobei die Schmelzvorrichtung (10; 10') **dadurch gekennzeichnet ist, dass** sie umfasst:
eine Hauptvorwärmkammer (12), aufweisend eine Beschickungsöffnung (16) zum Beschicken des metallischen Rohmaterials in den Ofenkörper (11), zum Vorwärmen des metallischen Rohmaterials durch das von dem Ofenkörper (11) durch die Beschickungsöffnung (16) eingeleitete Abgas, wobei der Vorwärmtunnel (14) mit der Hauptvorwärmkammer (12) verbunden ist, und die Hauptvorwärmkammer (12) ausgebildet ist, das metallische Rohmaterial speichern zu können; und
einen Schieber (13), einschließlich eines Schiebeelements (26) und einer Schiebeelement-Antriebseinrichtung (27) zum Veranlassen, dass sich das Schiebeelement (26) in der Hauptvorwärmkammer (12) hin und her bewegt, zum Schieben des metallischen Rohmaterials aus der Hauptvorwärmkammer (12) in den Ofenkörper (11) durch Veranlassen, dass sich das Schiebeelement (26) in Richtung auf die Beschickungsöffnung (16) bewegt, wobei
der Vorwärmtunnel (14) so ausgebildet ist, dass die Fördereinrichtung (32) das metallische Rohmaterial seitlich auf einem Niveau fördert, das höher ist als eine untere Kante der Beschickungsöffnung (16) der Hauptvorwärmkammer (12), und der Vorwärmtunnel (14) das metallische Rohmaterial mittels der Fördereinrichtung (32) in die Hauptvorwärmkammer (12) einspeist, während das metallische Rohmaterial durch das von dem Ofenkörper (11) durch die Hauptvorwärmkammer (12) eingeleitete Abgas vorgewärmt wird,
wobei die Schmelzvorrichtung (10; 10') ausgebildet ist, das in der Hauptvorwärmkammer (12) gespeicherte metallische Rohmaterial vorwärmen zu können, bis das metallische Rohmaterial durch den Schieber (13) geschoben und dadurch in den Ofenkörper (11) beschickt wird.

2. Schmelzvorrichtung (10; 10') nach Anspruch 1, **dadurch gekennzeichnet, dass** ein Niveau eines Bodens des Vorwärmtunnels (14) an einem Verbindungsabschnitt, an dem der Vorwärmtunnel (14) und die Hauptvorwärmkammer (12) verbunden sind, höher ist als eine Mitte in einer vertikalen Richtung der Beschickungsöffnung (16) der Hauptvorwärmkammer (12).

3. Schmelzvorrichtung (10; 10') nach Anspruch 1 oder 2, **dadurch gekennzeichnet, dass** sie weiter eine Verbindungseinrichtung (30) umfasst, die ausgebildet ist, einen Zustand einer Grenze zwischen einem festen Teil (10A) und einem beweglichen Teil (10B) zwischen einem verbundenen Zustand und einem getrennten Zustand umschalten zu können, wobei der feste Teil (10A) zumindest den Vorwärmtunnel (14) einschließt und an einem Fundament befestigt ist, der bewegliche Teil (10B) zumindest den Ofenkörper (11) einschließt und ausgebildet ist, sich relativ zu dem festen Teil (10A) bewegen zu können, um gekippt werden zu können, wenn geschmolzenes Metall, das durch Schmelzen des metallischen Rohmaterials erhalten wird, abgestochen wird, der verbundene Zustand ein Zustand ist, in dem das metallische Rohmaterial aus der Hauptvorwärmkammer (12) in den Ofenkörper (11) beschickt wird, und der getrennte Zustand ein Zustand ist, in dem das geschmolzene Metall aus dem Ofenkörper (11) abgestochen wird.

4. Schmelzvorrichtung (10; 10') nach Anspruch 3, **dadurch gekennzeichnet, dass** die Verbindungseinrichtung (30) einschließt: ein bewegliches Bodenelement (35), das zumindest einen Teil eines Bodenteils der Hauptvorwärmkammer (12) bildet; und eine Bodenelement-Antriebseinrichtung (36), die das bewegliche Bodenelement (35) antreibt, und wobei die Verbindungseinrichtung (30) ausgebildet ist, den Zustand der Grenze in den verbundenen Zustand zu bringen, indem veranlasst wird, dass sich das bewegliche Bodenelement (35) zu einer Verbindungsposition bewegt, die eine Position ist, in der sich das bewegliche Bodenelement (35) über die Grenze erstreckt, und den Zustand der Grenze in den getrennten Zustand zu bringen, indem veranlasst wird, dass sich das bewegliche Bodenelement (35) zu einer zurückgezogenen Position bewegt, die eine Position ist, in der das bewegliche Bodenelement (35) zu der Seite des festen Teils der Grenze zurückgezogen ist.

## Revendications

1. Installation de fusion (10 ; 10'), incluant un corps de four (11), dans lequel une matière première métallique devant être fondue est chargée, et un tunnel de préchauffage (14) présentant un dispositif de convoyage (32) qui convoie latéralement la matière première métallique et qui est un convoyeur parmi un convoyeur vibratoire horizontal et un convoyeur à bande, pour fondre la matière première métallique à l'aide d'arcs électriques formés par l'alimentation d'une ou de plusieurs électrodes d'arc (23) dans le corps de four (11) tout en préchauffant la matière première métallique par des gaz d'échappement générés à partir du corps de four (11), l'installation de fusion (10 ; 10') étant **caractérisée en ce qu'**elle comprend :
une chambre principale de préchauffage (12), présentant une ouverture de chargement (16) pour charger la matière première métallique dans le corps de four (11), pour préchauffer la matière première métallique par les gaz d'échappement introduits à partir du corps de four (11) à travers l'ouverture de chargement (16), dans laquelle le tunnel de préchauffage (14) est relié à la chambre principale de préchauffage (12), et la chambre principale de préchauffage (12) est configurée pour pouvoir stocker la matière première métallique ; et
un poussoir (13), incluant un organe de poussée (26) et un dispositif d'entraînement d'organe de poussée (27) pour amener l'organe de poussée (26) à se déplacer d'avant en arrière dans la chambre principale de préchauffage (12), pour pousser la matière première métallique de la chambre principale de préchauffage (12) dans le corps de four (11) en amenant l'organe de poussée (26) à se déplacer vers l'ouverture de chargement (16), dans laquelle
le tunnel de préchauffage (14) est configuré de telle sorte que le dispositif de convoyage (32) convoie latéralement la matière première métallique à un niveau supérieur à un bord inférieur de l'ouverture de chargement (16) de la chambre principale de préchauffage (12), et le tunnel de préchauffage (14) alimente la matière première métallique dans la chambre principale de préchauffage (12) par le dispositif de convoyage (32) tout en préchauffant la matière première métallique par les gaz d'échappement introduits à partir du corps de four (11) à travers la chambre principale de préchauffage (12),
de telle sorte que l'installation de fusion (10 ; 10') est configurée pour pouvoir préchauffer la matière première métallique stockée dans la chambre principale de préchauffage (12) jusqu'à ce que la matière première métallique soit poussée par le poussoir (13) et de ce fait chargée dans le corps de four (11).

2. Installation de fusion (10 ; 10') selon la revendication 1, **caractérisé en ce qu'**un niveau d'un fond du tunnel de préchauffage (14) au niveau d'une partie de raccordement, au niveau de laquelle le tunnel de préchauffage (14) et la chambre principale de préchauffage (12) sont raccordées, est supérieur à un centre dans une direction verticale de l'ouverture de chargement (16) de la chambre principale de préchauffage (12).

3. Installation de fusion (10 ; 10') selon la revendication 1 ou la revendication 2, **caractérisée en ce qu'**elle comprend en outre un dispositif de raccordement (30) configuré pour pouvoir faire commuter un état d'une limite entre une partie fixe (10A) et une partie mobile (10B) entre un état raccordé et un état séparé, dans laquelle la partie fixe (10A) inclut au moins le tunnel de préchauffage (14) et est fixée à une fondation, la partie mobile (10B) inclut au moins le corps de four (11) et est configurée pour pouvoir se déplacer par rapport à la partie fixe (10A) de sorte à pouvoir être inclinée lorsque du métal fondu obtenu par fusion de la matière première métallique est soutiré, l'état raccordé étant un état, dans lequel la matière première métallique est chargée depuis la chambre principale de préchauffage (12) dans le corps de four (11), et l'état séparé est un état, dans lequel le métal fondu est soutiré depuis le corps de four (11).

4. Installation de fusion (10 ; 10') selon la revendication 3, **caractérisée en ce que** le dispositif de raccordement (30) inclut : un organe de plancher mobile (35) qui forme au moins une partie d'une partie de plancher de la chambre principale de préchauffage (12) ; et un dispositif d'entraînement d'organe de plancher (36) qui entraîne l'organe de plancher mobile (35), et le dispositif de raccordement (30) est configuré pour pouvoir amener l'état de la limite dans l'état raccordé en amenant l'organe de plancher mobile (35) à se déplacer vers une position de raccordement, qui est une position, dans laquelle l'organe de plancher mobile (35) chevauche la limite, et pour amener l'état de la limite dans l'état séparé en amenant l'organe de plancher mobile (35) à se déplacer vers une position rétractée, qui est une position, dans laquelle l'organe de plancher mobile (35) est rétracté vers le côté de partie fixe de la limite.
